# EUROPEAN PATENT APPLICATION

(11) **EP 4 087 262 A1**
(43) Date of publication of application: **09.11.2022**
(21) Application number: 21172082.6
(22) Date of filing: 04.05.2021
(51) Int. Cl.: H04N 21/438, H04H 20/20, H04H 20/26, H04H 60/11, H04N 21/442, H04N 21/462, H04N 21/472

(54) **ELECTRONIC DEVICE AND METHOD FOR CHANNEL RECOMMENDATION**

(71) Applicant: Top Victory Investments Limited, Kwun Tong, Kowloon 999077 (HK)
(72) Inventor: SENAPATI, Gyana Ranjan, Bangalore (IN); ZADE, Anirudha Ramdas, Bangalore (IN)
(74) Representative: V.O.

(57) **Abstract**

A method (200) for channel recommendation includes a step of recognizing a program that is being played by a television on a current channel (201), a step of determining, upon recognition of the program, whether the program is currently provided on another channel (202) , a step of determining, when it is determined that the program is being provided on another channel, whether the another channel is providing the program with better quality (203), and a step of delivering to a user of the television, when it is determined that the another channel is providing the program with better quality, a message that contains information of the another channel (204).

## Description

The disclosure relates to channel recommendation, and more particularly to a method for recommending a channel that provides the same program with better quality, and to an electronic device configured to perform the method.

Conventionally, a television plays programs on a channel in response to a user manually selecting the channel through a controller cooperating with the television. It is common for a television user to browse through television channels one-by-one in an order either based on channel numbers of the channels or based on his/her personal preferences, and then stop browsing and stay on a channel playing a program that attracts the user at first glance. Alternatively, the user may directly switch to a specific channel when he/she already knows that a program of interest is being played on that channel. In both situations, the user generally would not know what programs are on other channels if they have not been browsed. However, as television channels grow in number, chances that a same program is played simultaneously on two or more channels increases. Therefore, it is possible that the program that interests the user is concurrently being played on another channel, maybe having better or worse quality, without the user's knowledge.

An object of the disclosure is to provide a method for recommending a channel that provides the same program with better quality, and an electronic device configured to perform the method, in order to improve user experience.

According to one aspect of the disclosure, the method includes a step of recognizing a program that is being played by a television on a current channel among plural channels, a step of determining, upon recognition of the program,, whether the program is currently provided on any of the plural channels other than the current channel, a step of determining, when it is determined that the program is being provided on a candidate channel among the plural channels other than the current channel, whether the candidate channel is providing the program with a quality that is better than a quality with which the current channel is providing the program, and a step of delivering, when it is determined that the candidate channel is providing the program with a quality that is better than the quality with which the current channel is providing the program, to a user of the television a message that contains information of the candidate channel.

According to one aspect of the disclosure, the electronic device includes a processing unit that is configured to recognize a program that is being played by a television on a current channel among plural channels. The processing unit is further configured to determine, upon recognition of the program, whether the program is currently provided on any of the plural channels other than the current channel. The processing unit is further configured to determine, when it is determined that the program is being provided on a candidate channel among the plural channels other than the current channel, whether the candidate channel is providing the program with a quality that is better than a quality with which the current channel is providing the program. The processing unit is further configured to deliver, when it is determined that the candidate channel is providing the program with a quality that is better than the quality with which the current channel is providing the program, to a user of the television a message that contains information of the candidate channel.

Other features and advantages of the disclosure will become apparent in the following detailed description of the embodiment (s) with reference to the accompanying drawings, of which:
Figure 1 is a block diagram that exemplarily illustrates a system according to an embodiment of the disclosure;
Figure 2 is a flow chart that exemplarily illustrates a method according to an embodiment of the disclosure; and
Figure 3 is a flow chart that exemplarily illustrates another method according to an embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

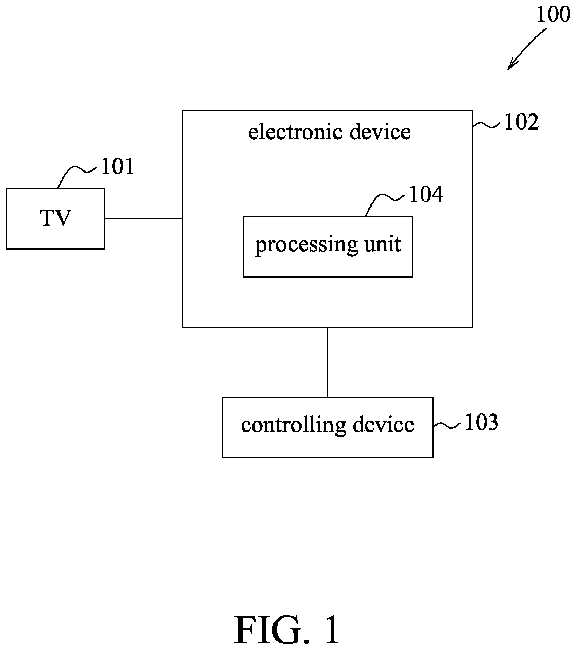

Referring to Figure 1, a system 100 in accordance with an embodiment of the disclosure is illustrated. The system 100 includes a television (TV) 101, an electronic device 102 and a controlling device 103. The television 101 is a television set and may be a smart TV. The electronic device 102 includes a processing unit 104 which, according to some embodiments of the disclosure, may include a central processing unit (CPU) and may also include at least one co-processor each dedicated to, for example, de-multiplexing, video/audio decoding or graphics acceleration. In an embodiment, the electronic device 102 is a set-top box that is separated from the television 101 and in communication with the television 101. In another embodiment, the electronic device 102 may be combined with the television 101 (that is, the electronic device 102 and the television 101 are integrated as a single device) . The controlling device 103 is configured to receive multiple user inputs and to transmit signals respectively corresponding to the user inputs to the electronic device 102. In an embodiment, the controlling device 103 is a remote control (e.g., an infrared (IR) remote control or a radio-frequency (RF) remote control) in wireless communication with the electronic device 102.

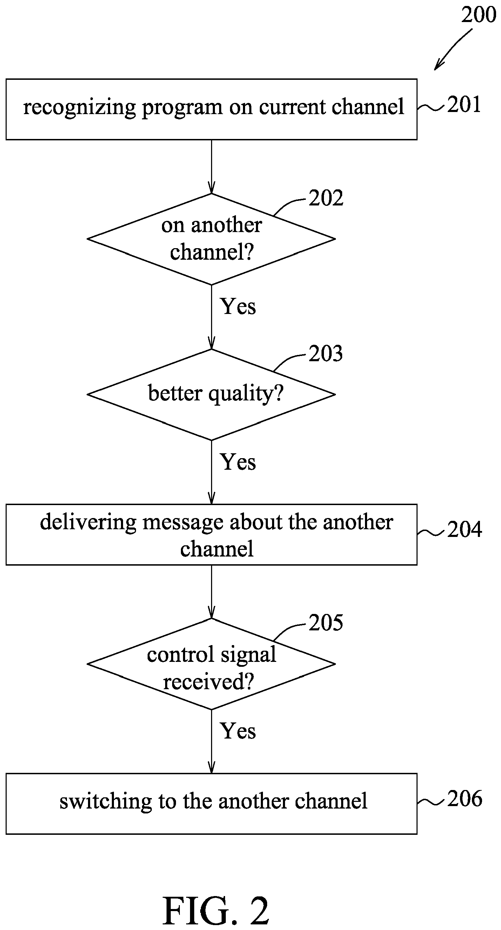

A method 200 for channel recommendation in accordance with an embodiment of the disclosure is to be implemented by the system 100, mainly by the electronic device 102, when both of the television 101 and the electronic device 102 are powered on, and when the television 101 is switched to a channel among plural channels accessible by the television 101, wherein the plural channels may be Internet protocol (IP) channels or RF channels. Referring to Figure 2, the method 200 includes Steps 201-206.

In Step 201, the electronic device 102 recognizes a program that is being played by the television 101 on the channel that the television 101 is currently switched to (referred to as "current channel" hereinafter) based on a program information mechanism related to the current channel. According to some embodiments, the program may be recognized based on an electronic programming guide (EPG), a Teletext page or any other mechanism for carrying program information related to the current channel.

Next, in Step 202, the electronic device 102, upon recognition of the program, determines whether the program is currently provided on any of the plural channels other than the current channel based on the program information mechanism that is related to the plural channels. For example, the electronic device 102 may compare a name of the program provided on the current channel with names of programs that are currently provided on the plural channels other than the current channel. If so, the procedure then goes to Step 203. According to an embodiment, when the current channel is an RF channel provided by a broadcaster that provides the same program with different qualities on multiple channels (e.g., the broadcaster may transmit the same video content on two channels, where the program in the standard definition (SD) or high definition (HD) video format is provided on one channel while the same program in the ultra-high definition (UHD) video format is provided on the other channel), the electronic device 102 in Step 202 may determine, based on the program information mechanism, whether the program is currently provided on any of the plural channels other than the current channel by the same broadcaster that is providing the program on the current channel.

In Step 203 that is performed when it is determined in Step 202 that the program is being provided on another channel (referred to as "candidate channel" hereinafter) among the plural channels other than the current channel, the electronic device 102 determines whether the candidate channel is providing the program with a quality that is better than a quality with which the current channel is providing the program. If so, the procedure then goes to Step 204.

According to some embodiments, when the current channel and the candidate channel are RF channels, the electronic device 102 in Step 203 may determine whether the candidate channel is providing the program with a better quality by determining whether the candidate channel is providing the program with a video resolution that is higher than the video resolution with which the current channel is providing the program based on the program information mechanism. According to some embodiments, when the current channel and the candidate channel are IP channels, the electronic device 102 in Step 203 may first determine an available network bandwidth for the television 101, and then determine whether the candidate channel is providing the program at a data rate that is supported by the available network bandwidth thus determined. When it is determined that the candidate channel is providing the program at a data rate that is supported by the available network bandwidth, the electronic device 102 in Step 203 may further determine whether the candidate channel is providing the program with a video resolution that is higher than the video resolution with which the current channel is providing the program, with an audio bitrate that is higher than the audio bitrate with which the current channel is providing the program, or with support of multiple audio languages, thereby determining whether the candidate channel is providing the program with a better quality. Information about said data rate, said video resolutions, said audio bitrates and support of multi-language audio may be obtained, for example, from Media presentation description (MPD) Extensible Markup Language (XML) files related to the current channel and the candidate channel when these channels use Moving Picture Experts Group-Dynamic Adaptive Streaming over HTTP (MPEG-DASH) technique to transmit data, or from index/playlist files (e.g., M3U8 files) related to the current channel and the candidate channel when these channels use HTTP Live Streaming (HLS) protocols developed by Apple to transmit data. In such case, the electronic device 102 is configured to parse the MPD XML files or the index/playlist files (e.g., M3U8 files) to obtain the required information.

In Step 204 that is performed when it is determined in Step 203 that the candidate channel is providing the program with a quality that is better than the quality with which the current channel is providing the program, the electronic device 102 delivers a message that contains information of the candidate channel to a user of the television 101. According to an embodiment of the disclosure, the electronic device 102 delivers the message to the user by instructing or controlling the television 101 to display an interactive message that recommends to the user the candidate channel which is providing the program the user is currently watching with better quality, in order to urge the user to input an instruction to the electronic device 102 through the controlling device 103 for switching the television 101 to the candidate channel. According to some embodiments, the interactive message may be displayed on the television 101 for only a short period of time (e.g., three seconds), and the user may operate the controlling device 103 in a manner that is specified in the interactive message (e.g., pressing a particular button of the controlling device 103) when the interactive message is being displayed on the television 101, in order for the controlling device 103 to generate a control signal that corresponds to the interactive message and that serves as said instruction for switching the television 101 to the candidate channel, and to send the control signal to the electronic device 102.

Next, in Step 205, the electronic device 102 determines whether the control signal is received while the interactive message is being displayed on the television 101. If so, the procedure goes to Step 206.

In Step 206, the electronic device 102 instructs or controls the television 101 to switch to the candidate channel upon receiving the control signal.

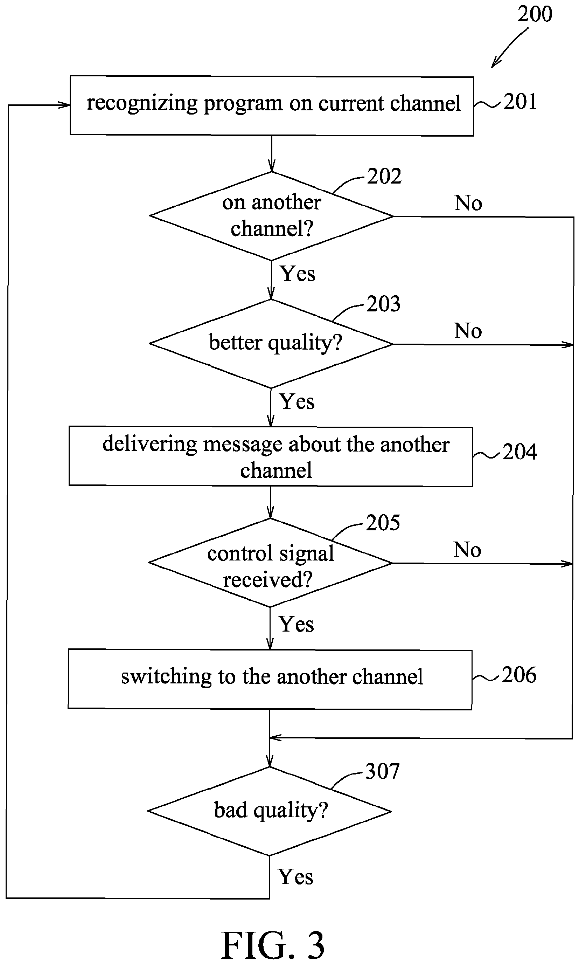

Figure 3 illustrated another method 300 that may be implemented by the system 100 of Figure 1 (mainly by the electronic device 102) for channel recommendation in accordance with an embodiment of the disclosure. Referring to Figure 3, the method 300 includes Steps 201-206 that are identical to those of the method 200 of Figure 2, and additionally includes Step 307. For the sake of brevity, description of Steps 201-206 will not be repeated here.

As can be seen in Figure 3, the procedure of method 300 goes to Step 307 when it is determined in Step 202 that the program is not currently provided by any channel other than the current channel, when it is determined in Step 203 that the candidate channel is not providing the program with better quality, when it is determined in Step 205 that the control signal is not received while the interactive message is being displayed on the television 101, or after Step 206. In Step 307, the electronic device 102 continuously (e.g., periodically) checks whether the television 101 is playing the program with a bad quality on the channel that the television is currently switched to (i.e., the current channel, which may be the "candidate channel" referred to in Steps 203-206 when Step 307 is performed after performing Step 206) . If so, the procedure goes to Step 201 in an attempt to find and recommend a channel that provides the same program with better quality.

According to an embodiment, when the current channel is an RF channel, the electronic device 102 in Step 307 may determine whether the television 101 is playing the program with a bad quality by determining a signal quality with respect to the current channel, and comparing the signal quality with a predetermined threshold, wherein it is determined that the television 101 is playing the program with a bad quality when the signal quality does not meet the predetermined threshold. The signal quality may be determined through a channel decoder of the electronic device 102 that may acquire information about the signal quality and a signal strength based on input RF signals received from a broadcaster-side terminal. In some embodiments, an output of the channel decoder includes a signal strength indicator (SSI) and a signal quality indicator (SQI), at least one of which may be used to measure the signal quality. The SQI may be calculated based on a carrier-to-noise ratio (C/N) and a bit error ratio (BER) . In an embodiment where the SSI and SQI are given in the scale of a lowest value of 0 to a highest value of 100, bad quality is determined when any of the values of the SSI and SQI is lower then, for example, 40; in another embodiment, bad quality is determined when both of the values of the SSI and SQI are lower than 40. The value of the threshold may be determined or adjusted based on the transmission medium and/or the modulation method applied (e.g., 64-Quadrature Amplitude Modulation (QAM) or 256-QAM).

According to an embodiment, when the current channel is a satellite television channel, the electronic device 102 in Step 307 may determine whether the television 101 is playing the program with a bad quality by detecting an audiovisual (AV) artifact that occurs in the program which is being provided on the current channel based on video and/or audio decoding errors detected by a video decoder and/or an audio decoder of the electronic device 102, wherein it is determined that the television 101 is providing the program with a bad quality when the audiovisual artifact is detected. According to an embodiment where the current channel is a satellite television channel, and where the procedure comes to Step 203 after it has been determined in Step 307 that the television 101 is providing the program with a bad quality, the candidate channel that appears in Step 203 may be a terrestrial television channel (that is, the program is transmitted in two media, which the user may or may not be aware of) .

It can be appreciated that the disclosed methods 200, 300 and the disclosed electronic device 102 performing the methods 200, 300 can indeed improve user experience with respect to the television 101 under many circumstances. For example, when a popular sporting event is simultaneously broadcasted as multiple programs by multiple IP broadcasters, if a user is using a television that is capable of playing programs with 8K resolution and that has access to a network bandwidth affordable of 8K-resolution contents to watch the sporting event on a first IP channel that transmits the program with a maximum 4K resolution, the disclosed methods 200, 300 and electronic device 102 may automatically search in the background to find another IP channel that would provide better user experience, and recommend the another IP channel thus found to the user (e.g., another IP channel playing the same sporting event with a higher resolution, possibly a 8K resolution, may be found). As another example, when a user is watching a program on a satellite television channel that is transmitted by a satellite under bad weather conditions, e.g., heavy rain, that causes AV artifacts to occur in the program, if the program is also transmitted by a terrestrial transmitter on a terrestrial television channel, the disclosed methods 200, 300 and electronic device 102 may automatically search in the background to find the terrestrial television channel, and recommend the terrestrial television channel to the user.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method (200, 300) for recommending a channel that provides the same program with better quality, the method being adapted to be performed by an electronic device (102) and **characterized by** steps of:
recognizing a program that is being played by a television (101) on a current channel among plural channels;
upon recognition of the program, determining whether the program is currently provided on any of the plural channels other than the current channel;
when it is determined that the program is being provided on a candidate channel among the plural channels other than the current channel, determining whether the candidate channel is providing the program with a quality that is better than a quality with which the current channel is providing the program; and
when it is determined that the candidate channel is providing the program with a quality that is better than the quality with which the current channel is providing the program, delivering to a user of the television (101) a message that contains information of the candidate channel.

2. The method (200, 300) of claim 1, **characterized in that** the step of delivering a message to a user is to display an interactive message on the television (101) to prompt input of an instruction to the electronic device (102) for switching the television (101) to the candidate channel.

3. The method (200, 300) of claim 1 or 2, the current channel and the candidate channel being Internet protocol (IP) channels, the method being **characterized in that**:
the step of determining whether the candidate channel is providing the program with a quality that is better includes:
determining an available network bandwidth for the television (101);
determining whether the candidate channel is providing the program at a data rate that is supported by the available network bandwidth thus determined; and
determining whether the candidate channel is providing the program with a video resolution that is higher than the video resolution with which the current channel is providing the program, with an audio bitrate that is higher than the audio bitrate with which the current channel is providing the program, or with support of multiple audio languages when it is determined that the candidate channel is providing the program at a data rate that is supported by the available network bandwidth.

4. The method (200, 300) of claim 1 or 2, the current channel and the candidate channel being radio-frequency (RF) channels, the method being **characterized in that**:
the step of determining whether the program is currently provided on any of the plural channels other than the current channel is to determine, based on a program information mechanism, whether the program is currently provided on any of the plural channels other than the current channel by a broadcaster that is providing the program on the current channel; and
the step of determining whether the candidate channel is providing the program with a quality that is better than a quality with which the current channel is providing the program is to determine whether the candidate channel is providing the program with a video resolution that is higher than the video resolution with which the current channel is providing the program based on the program information mechanism.

5. The method (200, 300) of claim 4, the method being **characterized in that**:
the step of determining whether the program is currently provided on any of the plural channels other than the current channel is to determine, based on an electronic programming guide (EPG) related to the plural channels, whether the program is currently provided on any of the plural channels other than the current channel by the broadcaster that is providing the program on the current channel.

6. The method (300) of claim 1 or 2, the current channel being a satellite television channel, the method being further **characterized by** following steps:
determining whether the television (101) is playing the program with a bad quality on the current channel, to which the television (101) is currently switched, by detecting an audiovisual (AV) artifact that occurs in the program; and
repeating the step of recognizing a program, the step of determining whether the program is currently provided, the step of determining whether the candidate channel is providing the program and the step of delivering a message in response to determining that the television (101) is playing the program with a bad quality on the current channel based on detection of the AV artifact, wherein the candidate channel is a terrestrial television channel.

7. The method (300) of claim 1 or 2, the current channel and the candidate channel being radio-frequency (RF) channels, the method being further **characterized by** following steps:
determining whether the television (101) is playing the program with a bad quality on the current channel, to which the television (101) is currently switched, by
determining a signal quality with respect to the current channel to which the television (101) is currently tuned; and
comparing the signal quality thus determined with a predetermined threshold; and
repeating the step of recognizing a program, the step of determining whether the program is currently provided, the step of determining whether the candidate channel is providing the program and the step of delivering a message in response to determining that the television (101) is playing the program with a bad quality on the current channel based on a comparison result indicating that the signal quality does not meet the predetermined threshold.

8. An electronic device (102) **characterized by**:
a processing unit (104) that is configured to:
recognize a program that is being played by a television (101) on a current channel among plural channels;
upon recognition of the program, determine whether the program is currently provided on any of the plural channels other than the current channel;
when it is determined that the program is being provided on a candidate channel among the plural channels other than the current channel, determine whether the candidate channel is providing the program with a quality that is better than a quality with which the current channel is providing the program; and
when it is determined that the candidate channel is providing the program with a quality that is better than the quality with which the current channel is providing the program, deliver to a user of the television (101) a message that contains information of the candidate channel.

9. The electronic device (102) of claim 8, the electronic device (102) being in communication with a controlling device (103), and **characterized in that** said processing unit (104) is configured to:
instruct the television (101) to display an interactive message thereon to prompt operation of the controlling device (103) for sending a control signal that corresponds to the interactive message; and
upon receiving the control signal while the interactive message is displayed on the television (101), instruct the television (101) to switch to the candidate channel.

10. The electronic device (102) of claim 8 or 9, the current channel and the candidate channel being Internet protocol (IP) channels, the electronic device (102) being **characterized in that** said processing unit (104) is further configured to:
determine an available network bandwidth for the television (101);
determine whether the candidate channel is providing the program at a data rate that is supported by the available network bandwidth;
when it is determined that the candidate channel is providing the program at a data rate that is supported by the available network bandwidth, determine whether the candidate channel is providing the program with a video resolution that is higher than the video resolution with which the current channel is providing the program, with an audio bitrate that is higher than the audio bitrate with which the current channel is providing the program, or with support of multiple audio languages; and
determine that the candidate channel is providing the program with a quality that is better than the quality with which the current channel is providing the program when it is determined that the candidate channel is providing the program with a video resolution that is higher than the video resolution with which the current channel is providing the program, that the candidate channel is providing the program with an audio bitrate that is higher than the audio bitrate with which the current channel is providing the program, or that the candidate channel is providing the program with support of multiple audio languages.

11. The electronic device (102) of claim 8 or 9, the current channel and the candidate channel being radio-frequency (RF) channels, the electronic device (102) being **characterized in that** said processing unit (104) is configured to:
determine, based on a program information mechanism, whether the program is currently provided on any of the plural channels other than the current channel by a broadcaster that is providing the program on the current channel;
when it is determined that the program is being provided on the candidate channel among the plural channels other than the current channel by the broadcaster, determine whether the candidate channel is providing the program with a quality that is better than a quality with which the current channel is providing the program by determining, based on the program information mechanism, whether the candidate channel is providing the program with a video resolution that is higher than the video resolution with which the current channel is providing the program.

12. The electronic device (102) of claim 11, the electronic device (102) being **characterized in that** said processing unit (104) is configured to:
determine whether the program is currently provided on any of the plural channels other than the current channel by the broadcaster that is providing the program on the current channel based on an electronic programming guide (EPG) related to the plural channels.

13. The electronic device (102) of claim 8 or 9, the current channel being a satellite television channel, the electronic device (102) being **characterized in that** said processing unit (104) is further configured to:
detect an audiovisual (AV) artifact that occurs in the program which is being provided on the current channel; and
recognizing the program in response to detection of the AV artifact,
wherein the candidate channel is a terrestrial television channel.

14. The electronic device (102) of claim 8 or 9, the current channel and the candidate channel being radio-frequency (RF) channels, the electronic device (102) being **characterized in that** said processing unit (104) is further configured to:
determine a signal quality with respect to the current channel to which the television (101) is currently switched;
compare the signal quality with a predetermined threshold; and
recognize the program when it is determined that the signal quality does not meet the predetermined threshold.

15. The electronic device (102) of any of claims 8-14, **characterized in that** the electronic device (102) is integrated with the television (101) or is a set-top box which is separated from the television (101) and which is in communication with the television (101).
